# FASCICULE DE BREVET EUROPEEN

(11) **EP 1 052 912 B1**
(45) Date de publication et mention de la délivrance du brevet: **21.04.2004**
(21) Numéro de dépôt: 99957359.5
(22) Date de dépôt: 03.12.1999
(51) Int. Cl.: A23L 3/3409, A23B 7/144, A23B 7/154, A01N 65/00, A01N 31/08

(54) **PROCEDE DE THERMONEBULISATION D' UNE COMPOSITION LIQUIDE DE TRAITEMENT DE FRUITS ET LEGUMES ET DISPOSITIF POUR LA MISE EN OEUVRE DE CE PROCEDE**
VERFAHREN ZUR THERMOZERSTÄUBUNG EINER FLÜSSIGEN ZUSAMMENSETZUNG FÜR FRÜCHTE UND GEMÜSE UND VORRICHTUNG ZUR DURCHFÜHRUNG DES VERFAHRENS
FOG TREATMENT METHOD USING A LIQUID COMPOSITION FOR TREATING FRUITS AND VEGETABLES AND IMPLEMENTING DEVICE

(30) Priorité: 03.12.1998 FR 9815305; 12.04.1999 FR 9904534
(43) Date de publication de la demande: 22.11.2000
(73) Titulaire: XEDA INTERNATIONAL, 13670 Saint-Andiol (FR)
(72) Inventeur: BOMPEIX, Gilbert, F-75011 Paris (FR); SARDO, Alberto, F-13160 Chateaurenard (FR)
(74) Mandataire: Bernasconi, Jean Raymond
(86) Numéro de dépôt international: PCT/FR1999/003006
(87) Numéro de publication internationale: WO 2000/032063

(56) Documents cités:
- EP-A- 0 719 499
- EP-A- 0 842 605
- FR-A- 2 566 681
- FR-A- 2 733 393
- GB-A- 641 739
- US-A- 3 518 096
- US-A- 4 857 345
- US-A- 5 679 351

## Description

La présente invention concerne un procédé de thermonébulisation particulièrement approprié pour la thermonébulisation sur des fruits et des légumes d'une composition liquide de traitement.

La thermonébulisation de liquides sur des fruits et légumes stockés dans des enceintes fermées est maintenant largement répandue dans la technique.

Un appareil de thermonébulisation et le procédé de thermonébulisation correspondant sont notamment décrits dans FR 84 10 372. Ce procédé est plus spécifiquement indiqué pour la thermonébulisation de compositions aqueuses. Bien qu'il conduise à la formation d'un brouillard fin (au moins 90% des gouttelettes formées ont un diamètre inférieur ou égal à 3 µm), la stabilité de ce brouillard n'est pas optimale. De fait, les gouttelettes formées ont tendance à s'agglomérer rapidement pour former de grosses gouttes en sortie de l'appareil de thermonébulisation, de telle sorte que l'enrobage résultant des fruits et légumes n'est pas des plus réguliers. De plus, selon ce procédé de l'art antérieur, l'épaisseur de l'enrobage est fonction de la durée de la thermonébulisation.

Ces deux caractéristiques rendent peu souhaitable la mise en oeuvre du procédé de l'art antérieur dans le cas du traitement de fruits et légumes.

En effet, les fruits et légumes traités étant destinés à la consommation, il est indispensable qu'un minimum de résidus reste présent à leur surface après traitement.

Un enrobage épais des fruits et légumes est donc à éviter.

Le procédé de l'invention, en assurant un enrobage fin et homogène des fruits et légumes et une bonne stabilité du brouillard formé permet de résoudre ce problème.

De façon traditionnelle, le brouillard de thermonébulisation produit en sortie de l'appareil de thermonébulisation est constitué de gouttelettes présentant une température comprise entre 150 et 200°C et animées d'une vitesse linéaire d'au plus 100 m/s. Ce brouillard est habituellement obtenu à partir d'une composition liquide aqueuse.

Les inventeurs ont découvert de façon étonnante que la stabilité d'un brouillard de thermonébulisation constitué de gouttelettes présentant une température supérieure à 200°C et animées d'une vitesse linéaire supérieure à 110 m/s, se trouvait grandement accrue.

Sans vouloir se limiter à une théorie quelconque, il semble que dans ces conditions de fonctionnement chaque gouttelette soit dotée d'une charge électrostatique élevée, laquelle permettrait d'éviter l'agglomération des gouttelettes entre elles, tout en assurant un enrobage monocouche, et donc particulièrement fin et homogène des fruits et légumes traités, et ceci en raison des phénomènes de répulsions électriques.

Ainsi l'invention concerne plus précisément un procédé pour la thermonébulisation d'une composition liquide de traitement de fruits et légumes, caractérisé en ce que l'on produit un brouillard de thermonébulisation constitué de gouttelettes présentant une température de 200 à 280°C et animées d'une vitesse linéaire comprises entre 110 et 140 m/s.

On notera que l'état de la technique n'enseigne nullement qu'une amélioration quelconque des caractéristiques d'enrobage puisse résulter d'un ajustement de ces deux paramètres dans les plages indiquées ci-dessus. Or, les valeurs usuellement attribuées à ces deux paramètres ne tombent pas dans ces plages déterminées.

De façon particulièrement avantageuse, la température des gouttelettes du brouillard de thermonébulisation est comprise entre 210 et 280°C, de préférence entre 220°C et 260°C.

On préfère en outre que la vitesse linéaire des gouttelettes soit comprise entre 115 et 135 m/s, mieux encore entre 120 et 130 m/s.

Habituellement, dans les dispositifs classiques de thermonébulisation, le brouillard de thermonébulisation est produit en sortie d'un canal cylindrique par injection, à l'entrée dudit canal, de la composition liquide traitante dans un jet d'air chaud projeté à grande vitesse dans ledit canal cylindrique par ladite entrée.

Selon un mode de réalisation préféré de l'invention, les caractéristiques de température et de vitesse du brouillard de thermonébulisation sont obtenues de façon originale par utilisation d'une composition liquide traitante non aqueuse, en fixant la température du jet d'air chaud, avant injection de ladite composition, dans une plage bien déterminée et en ajustant la vitesse linéaire du jet d'air chaud, avant injection, au-dessus de 160 m/s.

Plus précisément, le procédé de thermonébulisation mis en oeuvre implique l'injection d'une composition liquide traitante non aqueuse dans un jet d'air chaud présentant une température comprise entre 550 et 750°C et animé d'une vitesse linéaire de 160 à 400 m/s.

Ces conditions diffèrent de celles préconisées dans l'art antérieur. Selon FR 84 10 372, l'air chaud est chauffé à une température bien inférieure, généralement d'au plus 500°C.

Selon ce même document, la vitesse de projection de l'air chaud dans le canal, avant injection de la composition traitante, est généralement comprise entre 100 m/s et 300 m/s. Toutefois, les vitesses habituellement mises en oeuvre dans ce type de technique ne dépassent guère les 130 m/s.

De préférence, la vitesse linéaire de projection, avant injection, est comprise entre 200 et 280 m/s, mieux encore entre 220 et 250 m/s.

De même, une température de l'air chaud, avant injection, comprise entre 600 et 700°C est particulièrement souhaitable. Des conditions de température de 600 à 650°C sont idéales.

Selon un mode de réalisation préféré de l'invention, on ajuste le diamètre du canal cylindrique dans lequel est projeté l'air chaud à une valeur comprise entre 12 et 25 mm, de préférence entre 16 et 20 mm plus particulièrement entre 15 et 18 mm. Une valeur particulièrement appropriée est autour de 18 mm.

Ce paramètre permet d'ajuster plus facilement la vitesse de projection de l'air chaud dans la plage souhaitée comprise entre 160 et 400 m/s.

L'injection de la composition liquide traitante dans le jet d'air chaud entraîne une baisse de la température.

Du fait de l'utilisation d'une composition traitante liquide non aqueuse, cette baisse de température permet la production d'un brouillard de thermonébulisation présentant les caractéristiques souhaitées, et notamment une température élevée comprise entre 200 et 280°C.

Des compositions non aqueuses préférées comprennent 15 à 100% en poids d'une substance active et 0 à 80% en poids (de préférence 0 à 60% en poids) d'un solvant organique léger présentant un point d'ébullition compris entre 70 et 130°C.

La substance active a une activité protectrice et/ou prolonge la conservation des fruits et légumes. Cette substance active peut présenter un effet antioxydant, un effet antigerminatif et/ou un effet bactéricide et/ou un effet fongicide.

Des exemples d'antioxydants sont l'éthoxyquine, la diphénylamine, la vitamine E et le buthylhydroxyanisole.

Des exemples d'antigerminatifs sont le chlorophényl isopropylcarbamate et certains terpènes tels que la carvone.

Des exemples de fongicides sont pas exemple le thiabendazole, l'iprodione, la sec-butylamine et les terpènes.

La substance active de la composition traitante peut comprendre une ou plusieurs de ces substances, ou bien une ou plusieurs substances présentant à la fois des propriétés antigerminatives et/ou antioxydantes et/ou bactéricides et/ou fongicides.

Il est particulièrement avantageux d'utiliser à titre de substance active un composé choisi parmi l'eugénol, l'isoeugénol, un sel de l'eugénol acceptable sur le plan alimentaire, un sel de l'isoeugénol acceptable sur le plan alimentaire et leurs mélanges. Des sels particulièrement préférés sont notamment les sels de métaux alcalins tels que les sels de sodium, les sels de lithium et les sels de potassium.

Il doit être entendu que la composition traitante peut comporter, en plus du principe actif de type eugénol ou isoeugénol, un autre principe actif contrecarrant le développement des bactéries et des champignons et/ou inhibant la germination des pommes de terre et des oignons, ou encore présentant des propriétés antioxydantes.

De manière préférée, la substance active est l'eugénol ou l'isoeugénol, plus préférablement encore l'eugénol.

L'une des caractéristiques particulièrement avantageuse des substances actives de type eugénol et isoeugénol est le large spectre d'activité qui leur est associé.

Ces composés sont efficaces comme bactéricides, fongicides et inhibiteurs de la germination des tubercules (par exemple tubercules de pomme de terre) et des bulbes (par exemple bulbes d'oignons).

La supériorité de ces substances vis-à-vis des autres terpènes se manifeste par ailleurs dans le cas de souches bactériennes très variées et dans le cas d'expèces très diverses de champignons.

Des souches bactériennes sont par exemple *Erwinia Carotovora* ou *Escherichia Coli*.

Comme exemples d'espèces de champignons, on peut citer *Fusarium oxysporum, Geotrichum candidum, Gloeosporium fructigenum, Penecillium digitatum, Penicilium expansum, Phytophthora parasitica*.

De manière préférée, la composition traitante est non aqueuse.

Selon un mode réalisation préféré de l'invention, la composition liquide de traitement est constituée de la seule substance active.

Toutefois, l'invention n'entend pas de limiter à ce mode de réalisation particulier.

Ainsi, la substance active représente généralement de 15 à 100% en poids de la composition traitante, par exemple de 25 à 100%, plus préférablement de 50 à 100% en poids, mieux encore de 80 à 100% en poids.

Lorsque la présence d'un solvant est nécessaire ou souhaitable, celui-ci est préférablement un solvant non aqueux généralement présent dans. la composition à raison de 0 à 60-80% en poids, par exemple de 1 à 50% en poids, de préférence de 3 à 40% en poids, mieux encore de 5 à 35% en poids.

Lorsque la composition traitante comprend de 15 à 80% de substance active, le solvant est généralement présent à raison de 15 à 80% en poids, mieux encore de 20 à 40% en poids, très préférablement de 30 à 35% en poids.

Le solvant est notamment un solvant à bas poids d'ébullition choisi parmi les alcools aliphatiques, les esters alkyliques d'acides carboxyliques et les cétones aliphatiques. A titre d'exemple, on peut mentionner les alcools aliphatiques en C₁-C₅, les cétones aliphatiques en C₃-C₁₀ et les esters d'alkyle en C₁-C₅ d'acides carboxyliques aliphatiques en C₁-C₅.

A titre de solvant organique, on peut citer l'alcool éthylique, l'alcool isopropylique, l'acétone, la méthyléthylcétone, l'acétate d'éthyle, l'acétate de propyle, l'acétate de butyle, le propionate d'éthyle et le butyrate d'éthyle.

L'alcool éthylique et l'acétate de butyle sont notamment préférés.

Dans certains cas, il peut être souhaitable d'ajouter à la composition traitante non aqueuse jusqu'à 40% en poids d'un tensioactif non ionique. Lorsque les fruits et légumes à traiter sont particulièrement fragiles tels que fraises, pêches et framboises, on évitera l'utilisation d'un tel tensioactif.

Les tensioactifs utilisables selon l'invention sont les tensioactifs non ioniques habituellement indiqués pour le traitement de fruits et légumes.

On peut ainsi mentionner :
- le produit de condensation d'un alcool gras aliphatique, de préférence en C₈-C₂₂, avec un oxyde d'alkylène en C₂-C₃. L'oxyde d'alkylène en C₂-C₃ peut être l'oxyde d'éthylène, l'oxyde de propylène, ou bien un mélange d'oxyde d'éthylène et d'oxyde de propylène dans des proportions quelconques. Un exemple de tels tensioactifs est le produit de condensation de l'alcool laurylique (ou alcool n-dodécylique) avec 30 moles d'oxyde d'éthylène;
- le produit de condensation d'un alkylphénol dans lequel la chaîne alkyle est en C₈-C₂₂ avec un oxyde d'alkylène en C₂-C₃. Là encore, les produits de condensation avec l'oxyde d'éthylène, l'oxyde de propylène ou bien un mélange d'oxyde d'éthylène et d'oxyde de propylène dans des proportions quelconques sont également avantageux. A titre d'exemple de tels tensioactifs, on peut citer le produit de condensation du n-nonylphénol avec 10 moles d'oxyde d'éthylène;
- le produit de condensation d'un acide gras de préférence en C₈-C₂₂ avec un oxyde d'alkylène en C₂-C₃, par exemple l'oxyde d'éthylène ou l'oxyde de propylène ou un mélange d'oxyde d'éthylène et d'oxyde de propylène dans des proportions quelconques. Ces produits de condensation présentent une chaîne alkoxylée au niveau de la fonction hydroxyle du groupe carboxylique. Des tensioactifs préférés de ce groupe sont les produits de condensation obtenus à partir de l'acide oléique, de l'acide palmitique et de l'acide stéarique;
- le produit de condensation d'un glycéride d'acide gras en C₈-C₂₂ avec un oxyde d'alkylène en C₂-C₃ tel que l'oxyde d'éthylène et/ou l'oxyde de propylène. Parmi ceux-ci, le palmitate de glycérol éthoxylé est préféré;
- le produit de condensation d'un ester d'acide gras en C₈-C₂₂ du sorbitol avec un oxyde d'alkylène en C₂-C₃ qui peut être l'oxyde d'éthylène, l'oxyde de propylène ou leurs mélanges. Ces composés sont des polysorbates. Un exemple préféré est vendu sous la dénomination Tween 80.

Le tensioactif utilisé selon l'invention peut comprendre un ou plusieurs des tensioactifs énumérés ci-dessus.

De façon préférée, la teneur en tensioactif non ionique restera comprise entre 3 et 15% en poids.

Ainsi, de manière générale, la composition traitante est une composition non aqueuse comprenant essentiellement :
- de 15 à 100% en poids de principe actif ;
- de 0 à 80% en poids d'un solvant organique à bas point d'ébullition tel que défini ci-dessus ;
- de 0 à 15% en poids d'un tensioactif non ionique.

Plus préférablement encore, la composition traitante est une composition non aqueuse comprenant essentiellement :
- de 80 à 100 % en poids de principe actif ;
- de 0 à 10% en poids de tensioactif non-ionique ;
- de 0 à 10% en poids de solvant.

De façon surprenante, les inventeurs ont constaté que l'utilisation d'une composition traitante non aqueuse combinée au choix d'une température du jet d'air chaud, avant injection, de 550°C à 750°C et d'une vitesse linéaire du jet d'air chaud, avant injection, de 160 à 400 m/s dans des conditions telles que le brouillard de thermonébulisation produit présente les caractéristiques de température et de vitesse souhaitées, conduit à la formation de gouttelettes d'un diamètre moyen très faible, compris entre 0,05 et 1 µm, généralement entre 0,3 et 0,8 µm.

Ce résultat confirme l'intérêt du procédé de l'invention par rapport aux procédés classiques de formation des brouillards de thermonébulisation.

En effet, de façon classique, la taille des gouttelettes formées est au moins cinq fois supérieure.
→ En variante, la composition traitante, qui peut comprendre de l'eau, contient essentiellement :
   - de 15 à 80% en poids (de préférence de 25 à 60%) d'un principe actif choisi parmi l'eugénol, un sel acceptable sur le plan alimentaire de l'eugénol, l'isoeugénol, un sel acceptable sur le plan alimentaire de l'isoeugénol, et leurs mélanges ;
   - de 0 à 10% en poids d'un ou plusieurs agents réduisant l'évaporation (de préférence de 1 à 8%) ;
   - de 10 à 85% en poids (de préférence de 25 à 60%) d'un tensioactif non ionique tel que défini ci-dessus ;
   - de 0 à 80% en poids (de préférence de 0 à 30% en poids) d'un solvant choisi parmi l'eau, les alcanols, les glycols, les esters alkyliques d'acides alcanoïques et leurs mélanges.

Des exemples d'agents réduisant l'évaporation sont les polyterpènes dispersables dans l'eau ; les esters de glycérol de la résine de pin ; les gommes laques ; les lécithines ; les huiles siccatives ; l'alcool polyvinylique ; la polyvinylpyrrolidorie ; les polyacrylates de métaux alcalins ; et la gomme arabique.

Les polymères de l'isoprène et le caoutchouc naturel sont des polyterpènes utilisables dans le cadre de l'invention.

Les esters de glycérol de la résine de pin sont des esters de l'acide abiétique.

Les gommes laques sont utilisables telles quelles ou sous forme purifiée comme la résine Shellac.

Les lécithines sont des mélanges de combinaisons d'esters des acides oléique, stéarique, palmitique avec l'acide glycérophosphorique et la choline.

L'alcool polyvinlyque, la polyvinylpyrrolidone, les polycarylates de métaux alcalins et la gomme arabique sont des résines synthétiques hydrosolubles qui fonctionnent également comme agent réduisant l'évaporation du principe actif.

Il doit être entendu cependant que l'invention n'est en aucun cas limitée à l'utilisation de ces résines hydrosolubles spécifiques mais que tout autre type de résine hydrosoluble pourrait également convenir dès lors qu'elle est capable de réduire l'évaporation du principe actif.

Des exemples préférés d'huiles siccatives sont le linoléate de glycérol, l'acide linoléique et l'acide linolénique.

Les alcanols préférés sont les alcools aliphatiques en C₁-C₁₂.

Les glycols désignent, dans le cadre de l'invention, les alkylèneglycols et les polyalkylèneglycols.

On entend par alkylèneglycol, les alcools dihydroxylés dérivés d'hydrocarbures aliphatiques par remplacement de deux atomes d'hydrogène avec deux groupes hydroxyle. On préfère les (C₂-C₆)alkylèneglycol tels que l'éthylèneglycol et le propylèneglycol.

On entend par polyalkylèneglycol, les composés de formule :

HO-(CₚH₂ₚO)ₙ-H

où p et n sont des entiers compris entre 2 et 6.

A titre d'exemple, on peut citer le dipropylèneglycol.

Selon l'invention le groupe CₚH₂ₚO est linéaire ou ramifié. Le polyalkylèneglycol préféré selon l'invention est le dipropylèneglycol.

Les esters alkyliques d'acides carboxyliques préférés sont préférablement les esters d'alkyle en (C₁-C₆) d'acide (C₁-C₆)alcanoïque tel que l'acétate de butyle.

La composition traitante est préparée de façon conventionnelle en soi par simple mélange de ses constituants.

Lorsque la composition traitante comprend un sel acceptable sur le plan alimentaire, celui-ci peut être introduit dans la composition, lors de sa préparation, sous forme de sel ou bien sous forme neutre ; dans cette dernière hypothèse, le sel est formé in situ par addition d'une base appropriée dans la composition.

La quantité de composition traitante devant être appliquée aux fruits et légumes dépend de la nature des fruits et légumes concernés et de la méthode d'application sélectionnée.

Par thermonébulisation, on appliquera au total sur une période d'environ six mois de 50 à 250 g de principe actif par tonne de fruits ou légumes traités.

Le traitement des fruits et légumes est généralement mis en oeuvre juste après recolte ou pendant la conservation des fruits et légumes lors de leur stockage en chambre froide.

La thermonébulisation peut être continue ou intermittente au cours de la durée du stockage.

Lorsque la thermonébulisation est réalisée de façon répétée dans l'enceinte de stockage, le traitement est avantageusement renouvelé tous les 7 à 40 jours, de préférence 15 à 30 jours.

L'invention concerne plus particulièrement un procédé de thermonébulisation permettant d'inhiber la germination des bulbes (par exemple bulbes d'oignons) et des tubercules (par exemple tubercules de pomme de terre) utilisant une composition traitante à base d'une substance active choisie parmi l'eugénol, un sel acceptable sur le plan alimentaire de l'eugénol, l'isoeugénol, un sel acceptable sur le plan alimentaire de l'isoeugénol, et leurs mélanges.

L'invention concerne par ailleurs un procédé de thermonébulisation à action bactéricide et/ou fongicide utilisant une composition traitante à base d'une substance active choisie parmi l'eugénol, un sel acceptable sur le plan alimentaire de l'eugénol, l'isoeugénol, un sel acceptable sur le plan alimentaire de l'isoeugénol, et leurs mélanges.

Selon un autre de ses aspects, l'invention concerne un dispositif pour la mise en oeuvre du procédé de l'invention.

Ce dispositif comprend un ventilateur électrique à haute pression envoyant de l'air dans un premier conduit muni intérieurement d'une résistance électrique, ce conduit se rétrécissant au-delà de la résistance électrique et débouchant dans un canal cylindrique de plus petit diamètre, ainsi qu'une pompe prélevant un liquide et l'injectant dans ledit canal cylindrique à l'entrée de celui-ci, ledit dispositif permettant l'injection didit liquide de traitement à un débit compris entre 5 et 30 l/h et à une température comprise entre 10 et 30°C, et caracterisé en ce que la pression dudit ventilateur est comprise entre 0,22.10⁵ Pa et 0,30.10⁵ Pa.

Dans le conduit cylindrique de plus petit diamètre, l'air chauffé à- une vitesse linéaire comprise entre 160 et 400 m/s. De façon à assurer une vitesse linéaire de l'air chaud comprise entre 160 et 400 m/s (de préférence entre 200 et 280 m/s) à l'entrée du canal cylindrique, le dispositif de thermonébulisation est muni d'un ventilateur puissant dont la pression varie entre 0,22.10⁵ Pa et 0,30.10⁵ Pa et dont le débit varie entre 30 et 80 Nm³/h, plus préférablement entre 55 et 70 Nm³/h.

De façon à ajuster la vitesse linéaire dans la plage souhaitée, l'homme du métier pourra également jouer sur le diamètre du canal cylindrique. Celui-ci est préférablement compris entre 12 et 25 mm, mieux encore entre 16 et 20 mm, plus particulièrement entre 15 et 18 mm.

Grâce à l'utilisation d'un ventilateur électrique qui donne un débit d'air constant dans les conduits de l'appareil, d'une résistance électrique qui donne une chaleur constante et d'une pompe volumétrique qui donne un débit absolument constant de liquide, il est possible d'obtenir une bonne régularité de la thermonébulisation et par suite de la dimension des particules.

La résistance électrique est capable de chauffer l'air à une température de 550° à 750°C. de préférence de 600 à 700°C, mieux encore de 600 à 650°C.

Préférablement la puissance électrique de la résistance électrique est comprise entre 5 et 20 kW, mieux encore entre 5 et 8 kW, par exemple 10 kW ou 7,5 kW.

Selon le procédé de l'invention, le brouillard de thermonébulisation produit en sortie est constitué de gouttelettes présentant une température comprise entre 200 et 280°C et animées d'une vitesse linéaire comprise entre 110 et 140 m/s.

Dé façon à satisfaire ces conditions, l'homme du métier déterminera facilement :
- la longueur du canal cylindrique,
- le débit et la température de la composition traitante, lors de son injection à l'entrée dudit canal cylindrique,
compte-tenu de la température du jet d'air chaud et de sa vitesse linéaire avant injection.

Généralement, une longueur du canal cylindrique comprise entre 300 et 1500 mm convient.

De même, on fixe généralement le débit d'injection de la composition liquide entre 5 et 30 l/h, de préférence entré 10 et 25 l/h, par exempte entre 13 et 20 l/h.

Quant à la température de la composition liquide, celle-ci est généralement comprise entre 10 et 30°C, préférablement entre 15 et 25°C, par exemple entre 20 et 25°C.

Selon une variante, il est possible d'éloigner la partie de ventilation par rapport à la partie de chauffage et injection liquide, et de créer ainsi une installation fixe centralisée de ventilation pouvant desservir plusieurs points de nébulisation.

L'invention sera exposée ci-après plus en détail.

L'appareil selon l'invention comprend une soufflante 1 fournissant une pression de 25000 Pa et un débit de 60 Nm³/h.

La soufflante 1 envoie de l'air dans un conduit 2 à l'intérieur duquel est disposé une résistance électrique 3. Le conduit se prolonge au-delà de la résistance 3 par un convergent 4 débouchant dans un conduit 5 ayant un diamètre de 18 mm et une longueur de 800 mm.

L'arbre 6 du ventilateur 1 est entraîné par un moteur électrique. L'arbre 6 entraîne également une pompe volumétrique 7, par exemple par l'intermédiaire d'une courroie 8 ou encore directement.

La pompe 7 prélève par l'intermédiaire d'une canalisation 9 le liquide 10 contenu dans un réservoir 11 et l'injecte à l'entrée du conduit 5 par l'intermédiaire d'une canalisation 12. Une vanne trois voies 13 montée sur cette canalisation 12 permet un retour du liquide vers le réservoir 11 par l'intermédiaire d'une canalisation 14 pendant une phase de démarrage.

Dans les exemples suivants, l'appareil de thermonébulisation utilisé est tel que :
- le diamètre du canal cylindrique est de 18 mm;
- la longueur du canal cylindrique est de 800 mm;
- la puissance électrique de la résistance électrique est de 10 kW;
- la température de l'air chauffé à la sortie de la résistance est d'environ 625°C;
- la vitesse linéaire de projection de l'air chaud, avant injection est de 220 m/s.;
- le débit d'air du ventilateur est de 60 Nm³/h;
- la pression du ventilateur est de 25000 Pa.

### Exemple 1

On prépare de façon conventionnelle la composition suivante comprenant, en pourcentage en poids :
- 60% de matière active;
- 7% d'un polysorbate (Tween 80 commercialisé par la Société ICI);
- 33% d'acétate de butyle.

Cette composition est injectée dans le canal cylindrique par la canalisation 12 de l'appareil selon l'invention à un débit de 15 l/h, la température de la composition étant de 20-25°C.

On obtient ainsi un brouillard de thermonébulisation dont le diamètre moyen des gouttelettes est de 0,4 µm. La vitesse linéaire des gouttelettes de brouillard en sortie du canal cylindrique est de 125 m/s et la température des gouttelettes est de 240°C.

### Exemple 2

La composition injectée dans l'appareil de thermonébulisation contient 100% d'eugénol. Les conditions d'injections de la composition sont les mêmes qu'à 'exemple 1. Les caractéristiques du brouillard de thermonébulisation sont les mêmes qu'à l'exemple 1.

### Exemple 3

On procède comme à l'exemple 1 au départ d'une composition liquide traitante contenant :
- 90% en poids de matière active;
- 10% en poids de TWEEN 80.

Les caractéristiques du brouillard de thermonébulisation sont les mêmes qu'à l'exemple 1. Les conditions d'injections de la composition sont les mêmes qu'à l'exemple 1.

### Exemple 4

L'activité fongicide de l'eugénol et de l'isoeugénol a été démontrée in vitro et comparée à celle d'autres terpènes.

Le milieu cristomalt utilisé pour les évaluations des activités fongicides contient 0,1% de cristomalt (extrait de malt) et 0,2% d'agar agar.

Ce milieu de culture est, après stérilisation, porté à 55°C. Le composé terpénique testé est alors introduit sous forme pure dans le milieu de culture, à chaud. Immédiatement après agitation, le milieu amendé par le produit terpénique est coulé en boîtes de Pétri (diamètre 9 cm, rempli avec 20 ml de milieu). Le milieu gélosé se solidifie en refroidissant. Les boîtes de Pétri sont alors inoculées avec des explantats (plugs) de 6 mm de diamètre prélevés sur le bord d'une culture du champignon testé obtenue sur milieu cristomalt.

L'inoculation est réalisée à 22°C.

La croissance mycélienne a été déterminée périodiquement (5 à 15 jours suivant l'espèce du champignon).

Les résultats sont exprimés dans le tableau 3 ci-dessous en termes de CMI qui est la teneur (en µg/ml) permettant d'obtenir une inhibition totale de la croissance mycélienne.

On notera que des plages de variation des CMI sont indiquées au tableau 1. De fait, chaque expérience a été réalisée plusieurs fois de telle sorte que pour chaque terpène et pour chaque espèce de champignon, une valeur minimale et une valeur maximale ont été obtenues.

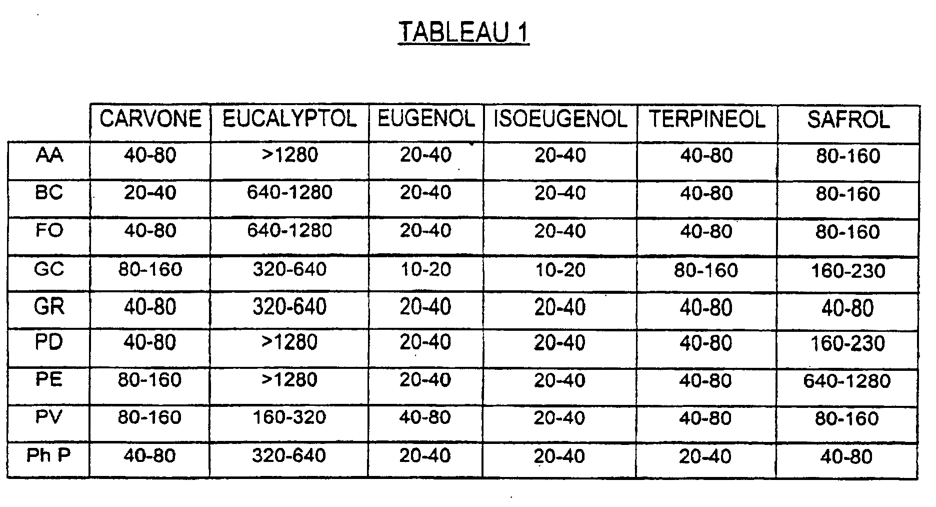

Dans tout le texte de la présente description, les significations des abrévations utilisées au tableau 3 sont les suivantes :
AA *Alternaria alternata*
BC *Botrytis cinerea*
FO *Fusarium oxysporum*
GC *Geotrichum candidum*
GR *Gliocladium roseum*
PD *Penicillium digitatum*
PE *Penicillium expansum*
PV *Phlyctaena vagabonda ("Gloeosporium")*
Ph P *Phytophtora parasitica*

l'analyse des résultats obtenus est réalisée simplement en utilisant le barème d'appréciation illustré au tableau 2 :

**TABLEAU 2**

| CMI incluse dans la plage délimitée par les deux valeurs indiquées en ppm (µg/ml) | Notes d'inhibition |
|---|---|
| 10-20 | 8 (Forte inhibition) |
| 20-40 | 7 |
| 40-80 | 6 |
| 80-160 | 5 |
| 160-320 | 4 |
| 320-640 | 3 |
| 640-1280 | 2 |
| >1280 | 1 (Faible inhibition) |

Au tableau 3, les résultats obtenus ont été exprimés en utilisant le barème du tableau 2.

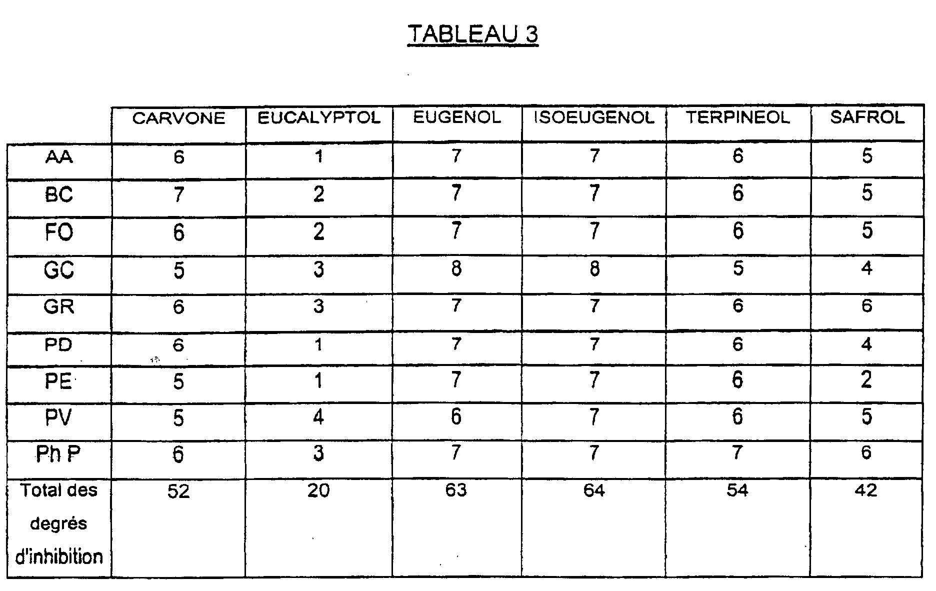

Il ressort clairement du tableau 3 que l'eugénol et l'isoeugénol sont nettement plus actifs que les autres terpènes.

### EXEMPLE 5

L'activité de l'eugénol et de l'isoeugénol sur la germination des spores a été évaluée in vitro et comparée à celle d'autres terpènes.

On utilise pour ce faire le protocole opératoire de l'exemple 4 sinon que la concentration d'eugénol et d'isoeugénol a été fixée à x µg/ml dans les milieux de culture utilisés et que l'on dépose 50 µl d'une suspension de spores ajustée à 100 000 spores/ml dans chaque boîte de Pétri.

La même expérience a été mise en oeuvre au départ d'un milieu de culture dépourvu de terpène (essai témoin).

Les résultats ont été évalués en utilisant les critères d'appréciation suivants :
++ : germination des spores comparables à celle du témoin
+ : réduction considérable du taux de spores germés
0 : spores non germés

Les tableaux 4, 5 et 6 rapportent les résultats obtenus pour 3 concentrations différentes des terpènes dans le milieu de culture, à savoir 40 µg/ml, 80 µg/ml et 1280 µg/ml.

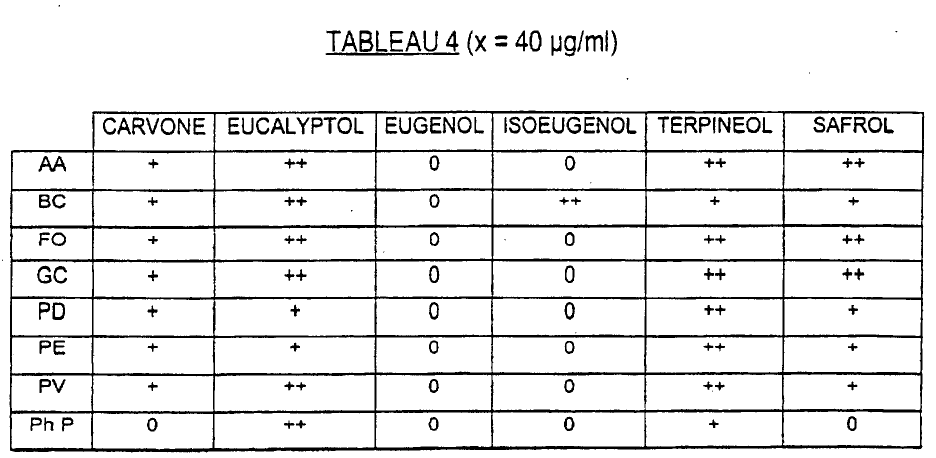

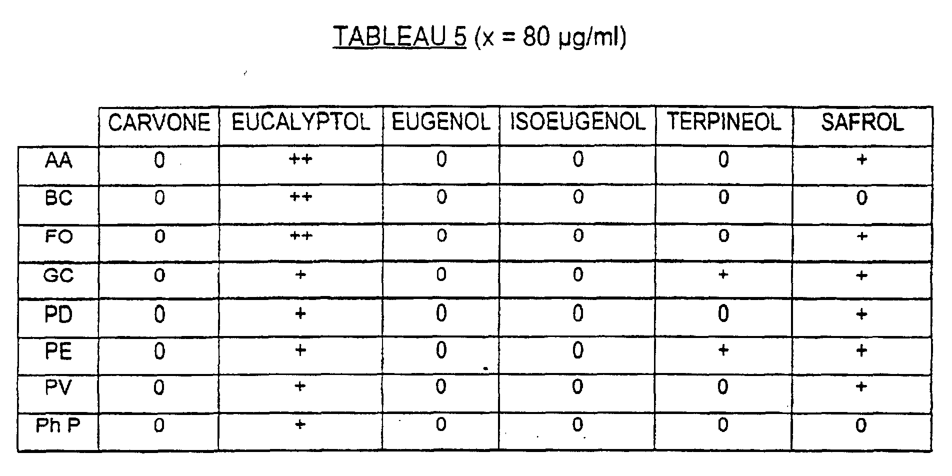

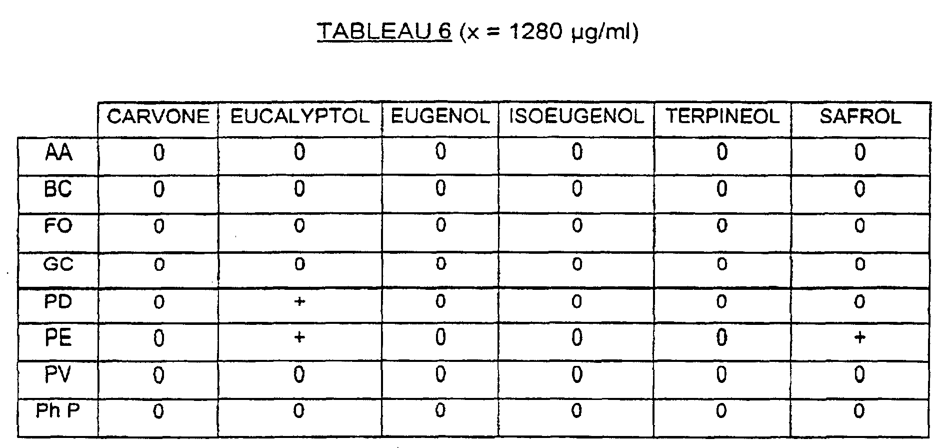

Il résulte clairement de ces différents tableaux que l'eugénol et l'isoeugénol présentent une activité bien supérieure à celle des autres terpènes. Une concentration de 40µg/ml suffit à inhiber la germination des spores.

### EXEMPLE 6

L'activité bactéricide de l'eugénol et de l'isoeugénol a été évaluée in vitro et comparée à celles d'autres terpènes.

Le milieu de culture utilisée est le milieu LB suivant :
Bactotryptone : 1 % en poids
Extrait de levure : 0,5% en poids
NaCl : 0,5% en poids
Agar Agar : 1,2% en poids.

Une suspension de bactéries à 10⁶ CFU/ml a été réalisée dans de l'eau stérilisée à partir du milieu LB. 200µl de cette suspension bactérienne ont été ajoutés dans 20 ml de milieu de culture LB préalablement stérilisé et porté à 55°C. Le terpène testé est alors ajouté au milieu de culture. Après agitation, le milieu est immédiatement réparti en boîtes de Pétri. Le milieu se solidifie en refroidissant.

L'incubation est réalisée à 28°C lorsque la bactérie est *Erwinia Carotovora* et à 37°C lorsque la bactérie est *Escherichia Coli.*

On observe le développement du voile bactérien dans le milieu de culture. La même expérience est réalisée en l'absence de terpène (expérience témoin).

Les résultats sont évalués en utilisant l'échelle d'appréciation suivante :
++ : voile bactérien identique au témoin
+ : voile bactérien présent avec une nette réduction de croissance par rapport au témoin
- : absence totale de développement.

Le tableau 7 résume les résultats obtenus pour 3 concentrations différentes, à savoir 20, 80 et 320 µg/ml dans le cas de la bactérie *Erwinia Carotovora*.

**TABLEAU 7**

| Concentration en µg/ml | CARVONE | EUCALYPTOL | EUGENOL | ISOEUGENOL | TERPINEOL | SAFROL |
|---|---|---|---|---|---|---|
| 20 | ++ | ++ | + | + | ++ | ++ |
| 80 | + | ++ | - | - | + | ++ |
| 320 | - | ++ | - | - | - | + |

Dans une autre série d'expérience, on a déterminé la concentration nécessaire de terpène inhibant totalement le développement des bactéries (CMI). Le protocole utilisé est celui décrit ci-dessus. Les résultats obtenus sont rapportés dans le tableau 8 ci-dessous.

**TABLEAU 8**

| CMI en µg/ml | CARVONE | EUCALYPTOL | EUGENOL | ISOEUGENOL | TERPINEOL | SAFROL |
|---|---|---|---|---|---|---|
| *Erwinia sp.* | 80-160 | 320-640 | 20-40 | 20-40 | 80-160 | 320-640 |
| *Escherichia* sp. | 320-640 | >640 | 40-80 | 40-80 | 160-320 | >640 |

Sur les deux bactéries, l'eugénol et l'isoeugénol se révèlent les plus actifs.

### EXEMPLE 7

L'efficacité de l'eugénol et de l'isoeugénol dans le traitement antigerminatif de tubercules de pommes de terre a été évaluée et comparée à celle d'autres terpènes.

Les compositions suivantes ont été utilisées dans le cas de l'eucalyptol, de l'eugénol, de l'isoeugénol, du limonène, du safrol et du terpinéol :
- 60% en poids de terpène;
- 7% en poids d'un émulsifiant non-ionique;
- 33% en poids d'acétate de butyle.

Dans le cas de la L-carvone, la composition suivante a été mise en oeuvre :
- 30% en poids de L-carvone;
- 10% en poids d'éthanol;
- 5% en poids d'émulsifiant non-ionique;
- 20% en poids d'eau;
- 35% en poids de propylèneglycol.

Le chlorophénylcarbamate d'isopropyle (CIPC) est un composé utilisé dans la technique comme antigerminatif des tubercules de pommes de terre. Son activité a été comparée à celle de l'eugénol et de l'isoeugénol.

La composition à base de chlorophénylcarbamate d'isopropyle a la formulation suivante :
- 20% en poids de chlorophénylcarbamate d'isopropyle;
- 50% en poids de propylèneglycol;
- 10% en poids d'émulsifiant non ionique;
- 20% d'eau.

Chacune des compositions testées a été appliquée par thermonébulisation. La température en sortie de l'appareil de thermonébulisation était de 240°C sauf dans le cas des compositions à base de L-carvone et de CIPC où elle était de 180°C.

La quantité de composition devant être appliquée est calculée dans chaque cas de façon à obtenir une concentration équivalente de matière active sur les tubercules de pommes de terre.

On a procédé dans cet exemple à des applications répétées en suivant le protocole suivant :
- 45 g/tonne de tubercules en début de stockage;
- 15 g/tonne de tubercules tous les 20 jours;
de telle sorte qu'après 6 mois, 165 g de principe actif ont été appliqués par tonne de tubercules.

Pendant le stockage, les tubercules étaient conservés en chambre froide à une température de 8 à 9°C.

Les résultats obtenus après 5 mois sont rapportés au tableau 9.

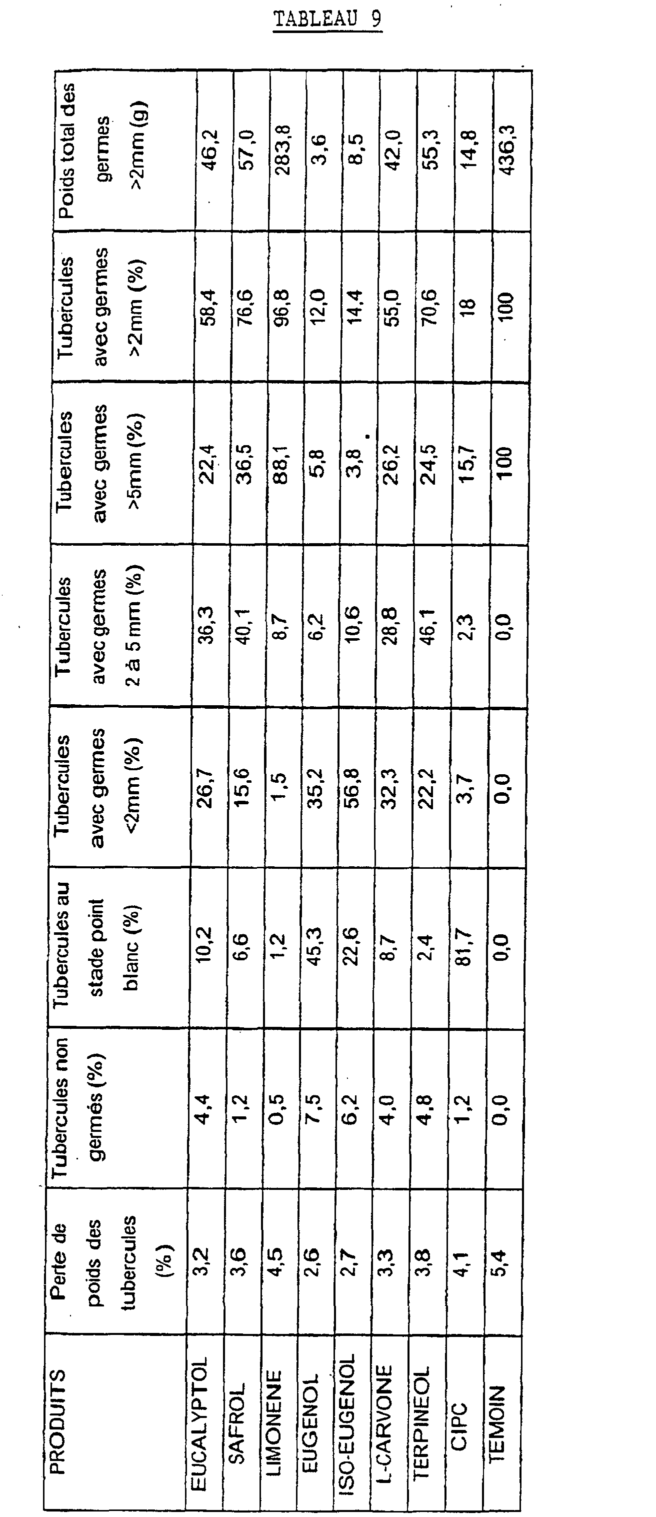

Il résulte clairement du tableau 9 que :
- les pourcentages maximum de tubercules non germés sont obtenus dans le cas de l'eugénol et de l'isoeugénol;
- l'eugénol et l'isoeugénol sont les deux terpènes ayant conduit à un pourcentage très faible de germes d'une taille supérieure à 2 mm.

La supériorité de l'eugénol et de l'isoeugénol ne saurait donc être contestée.

## Revendications

1. Procédé pour la thermonébulisation d'une composition liquide de traitement de fruits et légumes, **caractérisé en ce que** l'on produit un brouillard de thermonébulisation constitué de gouttelettes présentant une température de 200 à 280°C et animées d'une vitesse linéaire comprise entre 110 et 140 m/s.

2. Procédé selon la revendication 1, **caractérisé en ce que** la température des gouttelettes du brouillard de thermonébulisation est comprise entre 220 et 260°C.

3. Procédé selon l'une quelconque des revendications précédentes, **caractérisé en ce que** la vitesse linéaire des gouttelettes du brouillard de thermonébulisation est comprise entre 115 et 135 m/s, de préférence entre 120 et 130 m/s.

4. Procédé selon l'une quelconque des revendications 1 à 3 comprenant la formation dudit brouillard de thermonébulisation en sortie d'un canal cylindrique par injection, à l'entrée dudit canal, de ladite composition dans un jet d'air chaud projeté à grande vitesse dans ledit canal cylindrique par ladite entrée, **caractérisé en ce que** ledit jet d'air chaud présente, avant injection, une température comprise entre 550 et 750°C et étant animé, avant injection, d'une vitesse linéaire de 160 à 400 m/s.

5. Procédé selon la revendication 4, **caractérisé en ce que** la vitesse linéaire avant injection est comprise entre 200 et 280 m/s.

6. Procédé selon l'une quelconque des revendications 4 à 5, **caractérisé en ce que** la température dudit jet d'air chaud, avant injection, est comprise entre 600 et 700°C.

7. Procédé selon l'une quelconque des revendications 4 à 6, **caractérisé en ce que** le diamètre du canal est compris entre 12 et 25 mm, de préférence entre 16 et 20 mm.

8. Procédé selon l'une quelconque des revendications précédentes, **caractérisé en ce que** la composition liquide de traitement comprend 15 à 100% en poids d'une substance active et 0 à 80% en poids d'un solvant organique présentant un point d'ébullition compris entre 70 et 130°C.

9. Procédé selon la revendication 8, **caractérisé en ce que** le solvant organique est choisi parmi un alcool aliphatique, une cétone aliphatique et un ester d'alkyle d'un acide carboxylique aliphatique.

10. Procédé selon la revendication 9, **caractérisé en ce que** le solvant est l'alcool éthylique ou l'acétate de butyle.

11. Procédé selon l'une quelconque des revendications 8 à 10, **caractérisé en ce que** la composition liquide de traitement comprend en outre jusqu'à 40% en poids d'un agent tensioactif non ionique.

12. Procédé selon l'une quelconque des revendications précédentes,
**caractérisé en ce que** la composition liquide de traitement comprend essentiellement :
- de 80 à 100% en poids de principe actif ;
- de 0 à 10% en poids de tensioactif non-ionique ; et
- de 0 à 10% en poids de solvant.

13. Procédé selon l'une quelconque des revendications précédentes, **caractérisé en ce que** le principe actif est choisi parmi l'eugénol, un sel acceptable sur le plan alimentaire de l'eugénol, l'isoeugénol, un sel acceptable sur le plan alimentaire de l'isoeugénol, et leurs mélanges.

14. Procédé selon la revendication 13, **caractérisé en ce que** le principe actif est l'eugénol.

15. Procédé selon l'une quelconque des revendications précédentes, pour le traitement antigerminatif des bulbes et des tubercules, utilisant une composition traitante à base d'une substance active choisie parmi l'eugénol, un sel acceptable sur le plan alimentaire de l'eugénol, l'isoeugénol, un sel acceptable sur le plan alimentaire de l'isoeugénol, et leurs mélanges.

16. Procédé selon l'une quelconque des revendications 1 à 14, pour le traitement bactéricide et/ou fongicide, utilisant une composition traitante à base d'une substance active choisie parmi l'eugénol, un sel acceptable sur le plan alimentaire de l'eugénol, l'isoeugénol, un sel acceptable sur le plan alimentaire de l'isoeugénol, et leurs métanges.

17. Dispositif pour la mise en oeuvre du procédé selon l'une quelconque des revendications 1 à 10 comprenant un ventilateur électrique (1) à haute pression envoyant de l'air dans un premier conduit (2) muni intérieurement d'une résistance électrique (3), ce conduit (2) se rétrécissant au-delà de la résistance électrique (3) et débouchant dans un canal cylindrique (5) de plus petit diamètre, ainsi qu'une pompe (7) pour le prélèvement du liquide de traitement et l'injection dudit liquide à l'entrée dudit canal cylindrique (5), tel que la résistance électrique est capable de chauffer l'air à une température de 500 à 750°C ; le débit du ventilateur (1) étant compris entre 30 et 80 Nm³/h, et tel que ledit dispositif comprend des moyens d'injection du liquide de traitement dans le canal cylindrique (5) à un débit compris entre 5 et' 30 l/h et à une température comprise entre 10° et 30°C, **caractérisé en ce que** la pression dudit ventilateur (1) est comprise entre 0,22.10⁵ Pa et 0,30.10⁵ Pa.

18. Dispositif selon la revendication 17, **caractérisé en ce que** le ventilateur (1) a un débit de 55 à 70 Nm³/h,

19. Dispositif selon l'une quelconque des revendications 17 à 18, **caractérisé en ce que** !e diamètre du canal (5) varie entre 15 et 18 mm.

20. Dispositif selon l'une quelconque des revendications 17 à 19, **caractérisé en ce que** le canal (5) a une longueur de 300 à 1500 mm.

## Claims

1. Process for hot fogging with a liquid composition for the treatment of fruit and vegetables, **characterised in that** a hot fogging mist is produced made up of droplets at a temperature of 200 to 280°C and propelled at a linear speed of between 110 and 140 m/s.

2. Process in accordance with Claim 1, **characterised in that** the temperature of the droplets of the hot fogging mist is between 220 and 260°C.

3. Process in accordance with one of the preceding claims, **characterised in that** the linear velocity of the droplets of the hot fogging mist is between 115 and 135 m/s, preferably between 120 and 130 m/s.

4. Process in accordance with one of Claims 1 to 3 involving the formation of said hot fogging mist on leaving a cylindrical pipe by injecting said composition at the inlet to said pipe into a jet of hot air propelled at high speed into said cylindrical pipe via said inlet, **characterised in that** said hot air jet has a temperature between 550 and 750°C before injection and is propelled at a linear velocity of 160 to 400 m/s before injection.

5. Process in accordance with Claim 4, **characterised in that** the linear velocity before injection is between 200 and 280 m/s.

6. Process in accordance with one of Claims 4 to 5, **characterised in that** the temperature of said hot air jet is between 600 and 700°C before injection.

7. Process in accordance with one of Claims 4 to 6, **characterised in that** the diameter of the pipe is between 12 and 25 mm, preferably between 16 and 20 mm.

8. Process in accordance with one of the preceding claims, **characterised in that** the liquid treatment composition contains 15 to 100% by weight of an active substance and 0 to 80% by weight of an organic solvent with a boiling point between 70 and 130°C.

9. Process in accordance with Claim 8, **characterised in that** the organic solvent is chosen from an aliphatic alcohol, an aliphatic ketone and an alkyl ester of an aliphatic carboxylic acid.

10. Process in accordance with Claim 9, **characterised in that** the solvent is ethyl alcohol or butyl acetate.

11. Process in accordance with one of Claims 8 to 10, **characterised in that** the liquid treatment composition contains in addition up to 40% by weight of a non-ionic surfactant.

12. Process in accordance with one of the preceding claims, **characterised in that** the liquid treatment composition basically contains:
- from 80 to 100% by weight of active substance;
- from 0 to 10% by weight of non-ionic surfactant; and
- from 0 to 10% by weight of solvent.

13. Process in accordance with one of the preceding claims, **characterised in that** the active substance is chosen from among eugenol, a salt of eugenol suitable for food use, isoeugenol, a salt of isoeugenol suitable for food use, and their mixtures.

14. Process in accordance with Claim 13, **characterised in that** the active substance is eugenol.

15. Process in accordance with one of the preceding claims, for the germination inhibiting treatment of bulbs and tubers, using a treatment composition based on an active substance chosen from eugenol, a salt of eugenol suitable for food use, isoeugenol, a salt of isoeugenol suitable for food use, and their mixtures.

16. Process in accordance with one of Claims 1 to 14, for bactericidal and/or fungicidal treatment using a treatment composition based on an active substance chosen from eugenol, a salt of eugenol suitable for food use, isoeugenol, a salt of isoeugenol suitable for food use, and their mixtures.

17. A device for carrying out the process in accordance with one of Claims 1 to 10 comprising a highpressure electric fan (1) propelling air into a first duct (2) fitted with an electrical resistance (3) inside it, whilst this duct narrows beyond the electrical resistance (3) and feeds into a cylindrical pipe (5) with a smaller diameter, and also comprising a pump (7) to raise the treatment liquid and inject it into the entry of said cylindrical pipe, so that the electrical resistance is capable of heating the air to a temperature of 500 to 700°C; the delivery rate of the fan (1) is between 30 and 80 Nm³/h and so that said device comprises means of injecting the treatment liquid into the cylindrical pipe (5) at a rate between 5 and 30 1/h and at a temperature between 10 and 30°C, **characterised in that** the pressure of said fan (1) is between 0.22·10⁵ and 0.30·10⁵ Pa.

18. Device in accordance with Claim 17, **characterised in that** the fan (1) has a delivery rate of 55 to 70 Nm³/h.

19. Device in accordance with one of Claims 17 to 18, **characterised in that** the diameter of the pipe (5) varies between 15 and 18 mm.

20. Device in accordance with one of Claims 17 to 19, **characterised in that** the pipe (5) has a length of 300 to 1500 mm.

## Patentansprüche

1. Verfahren zur Thermozerstäubung einer flüssigen Zubereitung zur Behandlung von Früchten und Gemüsen, **dadurch gekennzeichnet, daß** man einen Thermozerstäubungs-Nebel bildet, der aus Tröpfchen gebildet ist, die eine Temperatur von 200 bis 280°C aufweisen und eine Lineargeschwindigkeit zwischen 110 und 140 m/s.

2. Verfahren nach Anspruch 1, **dadurch gekennzeichnet, daß** die Temperatur der Thermozerstäubungs-Nebeltröpfchen zwischen 220 und 260°C liegt.

3. Verfahren nach einem der vorhergehenden Ansprüche, **dadurch gekennzeichnet, daß** die Lineargeschwindigkeit der Thermozerstäubungs-Nebeltröpfchen zwischen 115 und 135 m/s, vorzugsweise zwischen 120 und 130 m/s liegt.

4. Verfahren nach einem der Ansprüche 1 bis 3, umfassend die Bildung des Thermozerstäubungs-Nebels am Auslaß eines zylindrischen Kanals durch Injektion der Zubereitung am Einlaß des Kanals in einen heißen Luftstrahl, der mit großer Geschwindigkeit über den Einlaß in den zylindrischen Kanal eingeblasen wird, **dadurch gekennzeichnet, daß** der heiße Luftstrahl vor der Injektion eine Temperatur zwischen 550 und 750°C aufweist und vor der Injektion auf eine Lineargeschwindigkeit von 150 bis 400 m/s gebracht ist.

5. Verfahren nach Anspruch 4, **dadurch gekennzeichnet, daß** die Lineargeschwindigkeit vor der Injektion zwischen 200 und 280 m/s liegt.

6. Verfahren nach einem der Ansprüche 4 bis 5, **dadurch gekennzeichnet, daß** die Temperatur des heißen Luftstrahls vor der Injektion zwischen 600 und 700°C liegt.

7. Verfahren nach einem der Ansprüche 4 bis 6, **dadurch gekennzeichnet, daß** der Durchmesser des Kanals zwischen 12 und 25 mm, vorzugsweise zwischen 16 und 20 mm liegt.

8. Verfahren nach einem der vorhergehenden Ansprüche, **dadurch gekennzeichnet, daß** die flüssige Behandlungszubereitung 15 bis 100 Gew.-% einer aktiven Substanz und 0 bis 80 Gew.-% eines organischen Lösungsmittels mit einem Siedepunkt zwischen 70 und 130°C umfaßt.

9. Verfahren nach 8, **dadurch gekennzeichnet, daß** das organische Lösungsmittel aus aliphatischen Alkoholen, aliphatischen Ketonen und Alkylestern von aliphatischen Carbonsäuren ausgewählt ist.

10. Verfahren nach 9, **dadurch gekennzeichnet, daß** das Lösungsmittel Ethylalkohol oder Butylacetat ist.

11. Verfahren nach einem der Ansprüche 8 bis 10, **dadurch gekennzeichnet, daß** die flüssige Behandlungszubereitung zusätzlich bis zu 40 Gew.-% eines nichtionischen oberflächenaktiven Mittels enthält.

12. Verfahren nach einem der vorhergehenden Ansprüche, **dadurch gekennzeichnet, daß** die flüssige Behandlungszusammensetzung im wesentlichen:
- 80 bis 100 Gew.-% Wirkstoff;
- 0 bis 10 Gew.-% nichtionisches oberflächenaktives Mittel; und
- 0 bis 10 Gew.-% Lösungsmittel umfaßt.

13. Verfahren nach einem der vorhergehenden Ansprüche, **dadurch gekennzeichnet, daß** der Wirkstoff aus Eugenol, einem ernährungsmäßig annehmbaren Salz von Eugenol, Isoeugenol, einem ernährungsmäßig annehmbaren Salz von Isoeugenol und Mischungen davon ausgewählt wird.

14. Verfahren nach Anspruch 13, **dadurch gekennzeichnet, daß** der Wirkstoff Eugenol ist.

15. Verfahren nach einem der vorhergehenden Ansprüche zur Entkeimungs-Behandlung von Zwiebeln, Knollen und Wurzeln unter Verwendung einer Behandlungszubereitung auf der Grundlage einer wirksamen Substanz ausgewählt aus Eugenol, einem ernährungsmäßig annehmbaren Salz von Eugenol, Isoeugenol, einem ernährungsmäßig annehmbaren Salz von Isoeugenol und Mischung davon.

16. Verfahren nach einem der Ansprüche 1 bis 14 zur bakteriziden und/oder fungiziden Behandlung unter Verwendung einer Behandlungszubereitung auf der Grundlage einer aktiven Substanz ausgewählt aus Eugenol, einem ernährungsmäßig annehmbaren Salz von Eugenol, Isoeugenol, einem ernährungsmäßig annehmbaren Salz von Isoeugenol und Mischungen davon.

17. Vorrichtung zur Durchführung des Verfahrens nach einem der Ansprüche 1 bis 10 umfassend ein elektrisches Gebläse (1) mit hohem Druck, das Luft in eine erste Leitung (2) einführt, die in ihrem Inneren mit einem elektrischen Widerstand (3) versehen ist, wobei diese Leitung (2) sich jenseits des elektrischen Widerstands (3) verengt und in einem zylindrischen Kanal (5) mit geringerem Durchmesser mündet, sowie eine Pumpe (7) zur Förderung der Behandlungsflüssigkeit und Injektion der Flüssigkeit in den Einlaß des zylindrischen Kanals (5), wobei der elektrische Widerstand dazu in der Lage ist, die Luft auf eine Temperatur von 500 bis 750°C zu erhitzen; der Durchsatz des Gebläses (1) zwischen 30 und 80 Nm³/h liegt und die Vorrichtung Einrichtungen zur Injektion der Behandlungsflüssigkeit in den zylindrischen Kanal (5) mit einem Durchsatz zwischen 5 und 30 1/h und einer Temperatur zwischen 10 und 30°C umfaßt, **dadurch gekennzeichnet, daß** der Druck des Lüfters (1) zwischen 0,22·10⁵ Pa und 0,30·10⁵ Pa liegt.

18. Vorrichtung nach Anspruch 17, **dadurch gekennzeichnet, daß** der Lüfter (1) einen Durchsatz von 55 bis 70 Nm³/h besitzt.

19. Vorrichtung nach einem der Ansprüche 17 bis 18, **dadurch gekennzeichnet, daß** der Durchmesser des Kanals (5) zwischen 15 und 18 mm variiert.

20. Vorrichtung nach einem der Ansprüche 17 bis 19, **dadurch gekennzeichnet, daß** der Kanal (5) eine Länge von 300 bis 1500 mm aufweist.
